# EUROPÄISCHE PATENTSCHRIFT

(11) **EP 1 155 949 B1**
(45) Veröffentlichungstag und Bekanntmachung des Hinweises auf die Patenterteilung: **24.08.2005**
(21) Anmeldenummer: 01109990.0
(22) Anmeldetag: 25.04.2001
(51) Int. Cl.: B62J 27/00, B60R 21/01

(54) **Vorrichtung zum Ansteuern eines Motorrad-Airbags**
Device for controlling a motorcycle airbag
Dispositif pour commander un airbag de motocyclette

(30) Priorität: 19.05.2000 DE 10024818
(43) Veröffentlichungstag der Anmeldung: 21.11.2001
(73) Patentinhaber: Bayerische Motoren Werke Aktiengesellschaft, 80809 München (DE)
(72) Erfinder: Thoma, Rainer, 89269 Voehringen (DE)

(56) Entgegenhaltungen:
- WO-A-97/39920
- WO-A-98/49031
- DE-A- 4 023 109
- DE-A- 19 637 108
- DE-A- 19 720 622
- DE-A- 19 822 850
- US-A- 5 071 160
- US-A- 5 330 226

## Beschreibung

Die Erfindung betrifft ein Motorrad mit einer Vorrichtung zum Ansteuern eines Motorrad-Airbags.

Es ist bekannt, für einen Motorrad-Aufsassen einen Airbag vorzusehen, um ihn im Bedarfsfall vor schwereren Verletzungen zu schützen (DE 197 20 622 A). Dabei ergibt sich jedoch das Problem, dass es bei ungünstiger Positionierung des Aufsassen durch das Aufblasen des Airbags zu Verletzungen oder sogar zu einem Trennen des Aufsassen vom Motorrad kommen kann.

Der Erfindung liegt die Aufgabe zugrunde, eine Vorrichtung der eingangs genannten Art zu schaffen, bei der das geschilderte Problem zumindest verringert ist.

Die Erfindung löst diese Aufgabe mit den Mitteln des Patentanspruchs 1. Die Distanzmessvorrichtung liefert jederzeit eindeutig eine Aussage über die momentane Position des Motorrad-Aufsassen. Abhängig von dieser Position und insbesondere dem Abstand zwischen Motorrad und dem Motorrad-Aufsassen erfolgt die Ansteuerung des Airbags. Dadurch lassen sich Verletzungen während des Aufblasvorgangs ausschließen.

Aus der WO 97/39920 A1 ist es bekannt, für die Passagiere in einem Fahrzeug einen Airbag in reduziertem Umfang zu aktivieren, wenn sich der Passagier in geringem Abstand vom Airbag-Gehäuse befindet.

Aus der US 5,330,226 ist eine Sitzbelegungs-Erkennungseinrichtung für einen Personenkraftwagen bekannt, bei der ein Infrarot-Sensor oberhalb des Fahrzeugsitzes im Dachhimmel angeordnet ist. Der Infrarot-Sensor weist eine Vielzahl von Gesichtsfeldern auf, mittels derer die relative Position eines Fahrzeuginsassen zum Airbag bestimmt wird, so dass der Airbag bei der Auslösung entsprechend angesteuert werden kann, ohne den Insassen zu verletzen.

Weiter ist aus der DE 40 23 109 eine Insassenerkennung für Pkws bekannt, bei der Sensoren im Lenkrad, der Sonnenblende, in der Kopfstütze und im Dachhimmel angeordnet sind. Nachteilig an all diesen bekannten Vorrichtungen ist, dass durch die Anordnung über dem Fahrgast nicht erkannt werden kann, ob sich der Fahrgast nach vorne beugt und beispielsweise eine Rücken- oder Schulter- statt einer Brustpartie erfasst wird.

Vorteilhafte Ausgestaltungen der Erfindung sind Gegenstände der weiteren Patentansprüche.

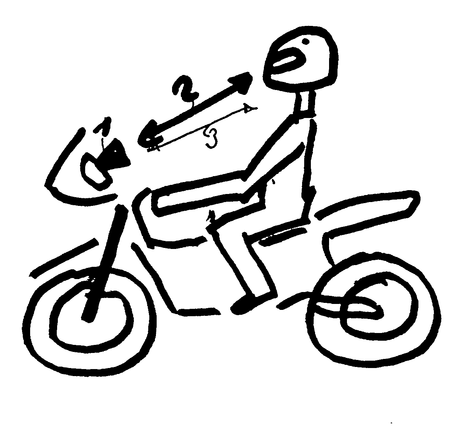

Die Erfindung wird nachfolgend anhand eines bevorzugten Ausführungsbeispieles näher erläutert. Die einzige Figur zeigt die Seitenansicht einer erfindungsgemäß angeordneten.

Die Distanzmeßvorrichtung 1 sendet fächerförmig mehrere Infrarot- oder Ultraschallstrahlen 2, 3 in Richtung des Motorradfahrers aus und empfängt die beiden reflektierten Strahlen. Bedingt durch die Anordnung im Instrumentenkombi, genügen bereits zwei Strahlen 2 und 3, die auf den Kopf und den Oberkörper des Motorradaufsassen zielen, um eine Information über seine Lage zu gewinnen.

Diese Information besteht in einer Abstandsangabe des jeweiligen Objekts (Kopf oder Oberkörper) vom Anbringungsort der Distanzmeßvorrichtung 1. Auch wenn sich der Motorradaufsasse nach vorne beugt, bleibt die Orientierung des Objekts bezüglich der Vorrichtung 1 erhalten.

Anstelle von nur zwei Strahlen können auch 3, 4,... Strahlen ausgesandt und empfangen werden. Dadurch erhöht sich die Genauigkeit der Entfernungsangaben. Unverändert gut bleibt die selbstätige Anpassung der gesamten Vorrichtung auf die unterschiedlichen Körpergrößen des Motorradfahrers. Kleinere Fahrer sitzen näher an der Vorrichtung 1. Ihr Kopf ist auch niedriger und kann von dem oberen Strahl 2 praktisch immer erfaßt werden.

Die Lage des Motorradfahrers kann auch mit einer Kamera aufgenommen werden. Auch hier ergibt sich der Vorteil, mit einer unveränderten Kameraausrichtung die Position der Fahrer unterschiedlicher Größe sicher erkennen zu können. Die Entfernung ergibt sich mit Hilfe üblicher Autofokussiertechniken.

## Patentansprüche

1. Motorrad mit einer Vorrichtung zum Ansteuern eines Motorrad-Airbags, **gekennzeichnet durch** folgende Merkmale:
eine Distanzmessvorrichtung zur Bestimmung des Abstands eines motorradfesten Punktes zu einem vorgegebenen Punkt an der Außenseite des Motorrad-Aufsassen ,
die Distanzmessvorrichtung besitzt einen am Motorrad-Aufsassen angeordneten Sender und einen motorradfesten Empfänger für das vom Sender ausgesandte Signal,
eine Anpassungsvorrichtung zur Steuerung eines Motorrad-Airbags entsprechend diesem Abstand.

2. Vorrichtung nach Anspruch 1, **dadurch gekennzeichnet, dass** der Sender am Helm des Motorrad-Aufsassen angeordnet ist.

3. Vorrichtung nach Anspruch 1 oder 2, **dadurch gekennzeichnet, dass** der Empfänger in einem Instrumentenkombi des Motorrads angeordnet ist.

4. Vorrichtung nach einem der Ansprüche 1 bis 3, **dadurch gekennzeichnet, dass** die Distanzmessvorrichtung auf der Basis von Ultraschall arbeitet.

## Claims

1. A motorcycle comprising a device for controlling a motorcycle air bag,
**characterised by** the following features:
a distance measuring device for determining the distance of a point fixed to the motorcycle from a predetermined point on the outside of the motor vehicle occupant,
the distance measuring device has a transmitter arranged on the motorcycle occupant and a receiver fixed to the motorcycle for the signal emitted by the transmitter,
an adaptation device for controlling a motorcycle air bag corresponding to this distance.

2. A device according to claim 1, **characterised in that** the transmitter is arranged on the helmet of the motorcycle occupant.

3. A device according to claim 1 or 2, **characterised in that** the receiver is arranged in an instrument cluster of the motorcycle.

4. A device according to any one of claims 1 to 3, **characterised in that** the distance measuring device operates on the basis of ultrasound.

## Revendications

1. Motocyclette comportant un dispositif pour commander un airbag de,
**caractérisée en ce qu'**
un dispositif de mesure de distance détermine la distance d'un point fixe de la motocyclette par rapport à d'un point prédéterminé situé sur le côté extérieur de l'usager ;
le dispositif de mesure de distance possède un émetteur placé sur l'usager de la motocyclette, et en vis à vis un récepteur fixe sur la motocyclette pour recevoir le signal de l'émetteur, et
un dispositif d'adaptation commande un airbag en fonction de la distance mesurée.

2. Dispositif selon la revendication 1,
**caractérisé en ce que**
l'émetteur est disposé sur le casque de l'usager de la motocyclette.

3. Dispositif selon la revendication 1 ou 2,
**caractérisé en ce que**
le récepteur est disposé dans une combinaison d'instruments de la motocyclette.

4. Dispositif selon l'une des revendications 1 à 3,
**caractérisé en ce que**
le dispositif de mesure de distance fonctionne sur la base d'ultrasons.
